Europäisches Patentamt

European Patent Office

Office européen des brevets

(19)

(11) EP 0 370 510 B1

## (12) EUROPEAN PATENT SPECIFICATION

(45) Date of publication and mention
of the grant of the patent:
**08.05.1996  Bulletin 1996/19**

(51) Int Cl.6: **H04L 12/56**

(21) Application number: **89121677.2**

(22) Date of filing: **23.11.1989**

(54) **Broad band digital exchange**

Digitale Breitbandvermittlung

Central numérique à large bande

(84) Designated Contracting States:
**DE GB**

(30) Priority: **25.11.1988  JP  297482/88**
**25.11.1988  JP  297483/88**
**23.12.1988  JP  325484/88**

(43) Date of publication of application:
**30.05.1990  Bulletin 1990/22**

(73) Proprietor: **SUMITOMO ELECTRIC INDUSTRIES, LTD.**
**Osaka-shi, Osaka 541 (JP)**

(72) Inventors:
 • **Fukaya, Naoki c/o Yokohama Works of**
   **Sakae-ku Yokohama-shi Kanagawa (JP)**
 • **Kakuno, Yutaka, Yokohama Works Sumitomo**
   **Electric**
   **Yokohama-shi, Kanagawa (JP)**

(74) Representative: **Lehn, Werner, Dipl.-Ing. et al**
**Hoffmann, Eitle & Partner,**
**Patentanwälte,**
**Postfach 81 04 20**
**81904 München (DE)**

(56) References cited:
**WO-A-84/03977**          **US-A- 4 679 190**

 • **PROCEEDINGS OF THE IEEE INFOCOM 1988,**
   **New Orleans, LO, US, 27th - 31st March 1988,**
   **pages 1-8; T.T. LEE et al.: "The architecture of a**
   **multicast broadband packet switch"**
 • **IEEE JOURNAL ON SELECTED AREAS IN**
   **COMMUNICATIONS, vol. SAC-5, no. 9,**
   **December 1987, pages 1426-1435, New York, NY,**
   **US; K.Y. ENG et al.: "A knockout switch for**
   **variable-length packets"**

## Description

### Background of the Invention

The present invention relates to a broad band digital exchange applicable to a broad band ISDN (integrated services digital network), and more particularly to a broad band digital exchange with uses an ATM (asynchronous transfer mode).

A prior art ATM exchange uses a Banyan network in which 2x2 unit switches are regularly arranged. The Banyan network is used as a switching element network for exchanging digital information. The connection state of each unit switch is switched in accordance with a destination address stored in each cell. Thus, the cells inputted to input channels of the Banyan network are outputted to predetermined output channels. If there is a conflict between the cells inputted to two input terminals of the unit switches because of the same destination addresses, one of the cells is preferentially outputted to the predetermined output terminal of the unit switch in accordance with the stored address. However, the other cell is outputted to an output terminal which is different from the intended output terminal specified by the destination address. As a result, the other cell reaches the output terminal which is different from the destination address.

Thus, in the switching element network of the prior art ATM exchange, the cell whose transmission path is not preferentially selected when the cells conflict is not outputted to the predetermined output terminal determined by the destination address stored in the cell. Hereinafter, the cell which is preferentially selected is called a won cell, and the cell which is not preferentially selected is called a lost cell. Once the cell loses, it becomes a totally invalid cell in the Banyan network. In each unit switch, the connection state of the switch is determined based on only one bit of the destination address. As a result, there is a possibility that a lost cell conflicts with a valid cell which has heretofore continuously worn and wins to the valid cell in the unit switch of the next stage. As a result, the invalid cell in the Banyan network impedes the transmission path of the valid cell and it raises a discard rate of the cell in the ATM exchange.

Beside the Banyan network, a Batcher Banyan network is also used as the switching element network in the ATM exchange. The Batcher Banyan network is provided with a sorting network in a preceding stage to the Banyan network.

In the Banyan network, the discard rate of the cell is raised when the cells conflict in the network, as described above, on the other hand, in the Batcher Banyan network, a probability of conflict of the cells is low but it requires $2^N \times N \times (N+1)/2$ 2x2 unit switches in the Batcher switching network, where N is the number of input channels. As a result, the volume of hardware of the network increases and the system is of large size.

Proceedings of the IEEE Infocom 1988 March 1988 pl-8 shows the features of the preamble of claim 1.

US-A-4 679 190 shows an acknowledgement means which gives a confirmation signal, not a control signal.

### Summary of the Invention

It is an object of the present invention to provide a broad band digital exchange which can reduce the amount of hardware in the network, lower the discard rate of the cell and permits proper information transmission.

According to the present invention, there is provided a broad band digital exchange comprising;

a plurality of input channels and output channels; and

a plurality of stages of first switching means for selectively connecting said input channels and said output channels;

wherein cell information having address data added thereto, and applied to said input channels is sent out to the output channels corresponding to the address data by switching said plurality of stages of first switching means in accordance with the address data,

an identification bit for indicating, whether effective information is retained, is stored in the cell information, and

said plurality of stages of first switching means determine connection states of corresponding switches in accordance with the address data and identification bit,

characterised by

a buffer memory arranged in preceding state to each of said input channels;

a detection signal output unit provided for each of said plurality of stages of first switching means for detecting conflict between the cell information based on the address data added to the input information and producing a conflict detection signal for only a losing one of the conflicting information; and

buffer controller for controlling the send-out of information stored in said buffer memory in accordance with the conflict detection signal supplied from said detection signal output unit; and

a plurality of stages of second switching means provided in duplex to said plurality of stages of first switching means for selectively connecting said input channels with said output channels to establish a path for the conflict detection signal supplied from each said detection signal output unit.

Further, based on an destination address and the identification bit stored in the header of the cell, each of a number of 2x2 unit switches determines the connection state of the switch itself. Accordingly, if the cells which have effective information conflict each other, the cell having a higher priority is supplied to a predetermined output terminal in accordance with the stored destination address. The cell having a lower priority has the identification bit in the header modified to non-effective information so that it is supplied to the other side than the predetermined output terminal.

As a result, even if the cell which has lost in the confliction of the cells is transmitted to the output channel which is different from the destination address stored in the cell, the lost cell is recognized as one having no effective information. A probability of loss of the cell having effective information is thus lower and there will be no case where wrong information is transmitted to the output channel.

The present invention comprises a buffer memory arranged in a preceding stage to each input channel, a detection signal output unit provided for every plural stages of switching elements, and a buffer control unit for controlling sending of information stored in the buffer memory based on a conflict detection signal supplied by the detection signal output unit.

When there is a conflict of information in the switching elements, the switching elements supply the conflict detection signal to the buffer control unit. In response to the conflict detection signal, the buffer control unit retransmits the information relating to the discard which has been stored in the buffer memory.

The present invention also comprises a buffer memory arranged in a preceding stage to each input channel, a detection signal output unit provided for every plurality of first switching elements for switching connections between the input channel and the output channel, a buffer control unit for controlling sending of information stored in the buffer memory based on a conflict detection signal supplied from the detection signal output unit, and second switching elements provided in duplex to correspond to the first switching elements, for forming a path of the conflict detection signal.

Thus, when a conflict of information occurs in the switching elements, the conflict detection signal is sent to the buffer control unit through the same duplex path as that through which the cell which had lost in the conflict reached. As a result, the buffer control unit can detect the information in the input channel which is to be discarded and retransmits the information relating to the discard which has been stored in the buffer memory.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

Brief Description of the Drawings

Fig. 1 shows a format of a cell (information) used in embodiments of the present invention,
Fig. 2 shows a block diagram of an 8x8 exchange switch which is used in a first embodiment of the present invention in which a 2x2 unit switch is used as a unit of construction,
Fig. 3 shows a block diagram of the 2x2 unit switch shown in Fig. 2,
Fig. 4 shows a circuit diagram of the 2x2 unit switch shown in Fig. 2,
Figs. 5(a) and 5(b) shown timing charts of a clock signal CLK and a switching pulse P used in the embodiments of the present invention,
Fig. 6 shows a configuration of a broad band digital exchange in accordance with a second embodiment of the present invention,
Fig. 7 shows a block diagram of a buffer memory shown in Fig. 6,
Fig. 8 shows a block diagram of a detection signal output unit shown in Fig. 6,
Fig. 9 shows a configuration of a broad band digital exchange in accordance with a third embodiment of the present invention,
Fig. 10 shows a block diagram of a buffer memory shown in Fig. 9, and
Fig. 11 shows a block diagram of a switching block shown in Fig. 9.

Detailed Description of the Preferred Embodiments

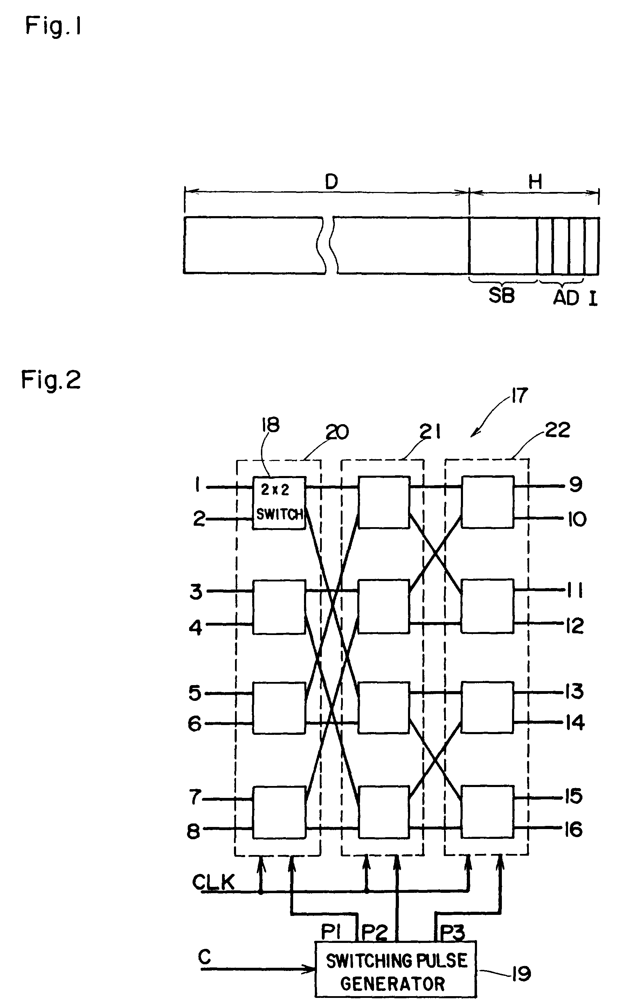

Fig. 1 shows a format of a cell used in the embodiments of the present invention. This cell is used as a unit packet of information transmission.

The cell comprises a fixed length header H and a fixed length information field D. The header H has two bytes which comprise a one-bit vacancy identification bit I, a 3-bit address AD which represents an address to which the cell is to be transmitted, and a spare area SB in which control data such as an error detection code is written. Those bits are arranged in the order described above, preceded by the vacancy identification bit I in accordance with the time sequence of the transmission. The information field D has 98 bytes in which digital information expressed in binary notation, to be transmitted is stored therein. When effective information is retained in the information field D, the vacancy identification bit I of the header H is set to "1". When effective information is not retained in the information field D, the vacancy identification bit I is set to "0".

The number of bytes and bit described above are examples in the first embodiment of the present invention and they may change in accordance with an applicable system.

Fig. 2 shows a block diagram of an 8x8 exchange switch in the first embodiment of the present invention. The 8x8 exchange switch constitutes a switching network of the digital exchange.

The 8x8 exchange switch 17 has $8(=2^3)$ input channels 1 to 8 and eight output channels 9 to 16, and it forms a 3 columns by four rows Banyan network by using a 2x2 unit switch 18 as a unit. The Banyan network uses total of twelve 2x2 unit switches 18. A switching pulse generator 19 receives a cell synchronization signal C and supplies switching pulses p1 to p3 at different timings to blocks 20 to 22, which are formed for the respective columns of the 2x2 unit switches 18. The switching pulses p1 to p3 are outputted in synchronism with the timing at which the leading edge of the cell passes through the 2x2 unit switch 18. Thus, the transmission paths of the cell data supplied to the input channels 1 to 8 are switched for each of the blocks 20 to 22 in synchronism with the timing at which the switching pulses p1 to p3 are supplied. As a result, the cell information supplied to the input channels 1 to 8 are supplied to the predetermined output channels 9 to 16.

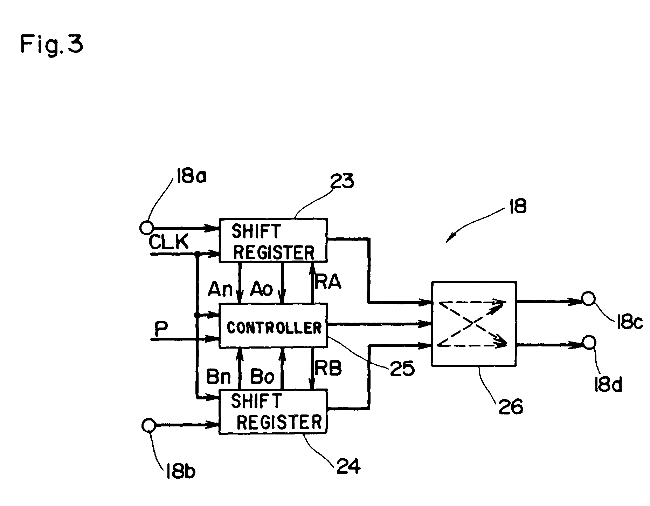

Fig. 3 shows a block diagram of the 2x2 unit switch 18, which constitutes a unit of the 8x8 exchange switch 17.

Input terminals 18a and 18b are connected to shift registers 23 and 24, respectively, to which a clock pulse CLK is applied. The cells A and B supplied to the input terminals 18a and 18b are synchronized with the clock pulse CLK and read into the shift register 23 and 24 bit by bit.

A controller 25 determines a connection state of each of the 2x2 unit switches 18 based on the vacancy identification bit I and the destination address AD stored in the cell. The controller 25 reads in input bit signals $A_o$, $A_n$ and $B_o$, $B_n$ from shift registers 23 and 24 at the timing at which the switching pulse P is applied. Those signals are outputted from predetermined ones of flip-flops which constitutes the shift registers 23 and 24. As a result, the controller 25 reads in the vacancy identification bits I which are top bits of the cells A and B and the n-th bit of the destination address AD. The controller 25 controls the connection state of the switching element 26 based on the bits $A_o$, $B_o$ and the bits $A_n$, $B_n$. The suffix n means that the 2x2 unit switch 18 is located in the n-th column (n=1 to 3) of the 8x8 exchange switch 17.

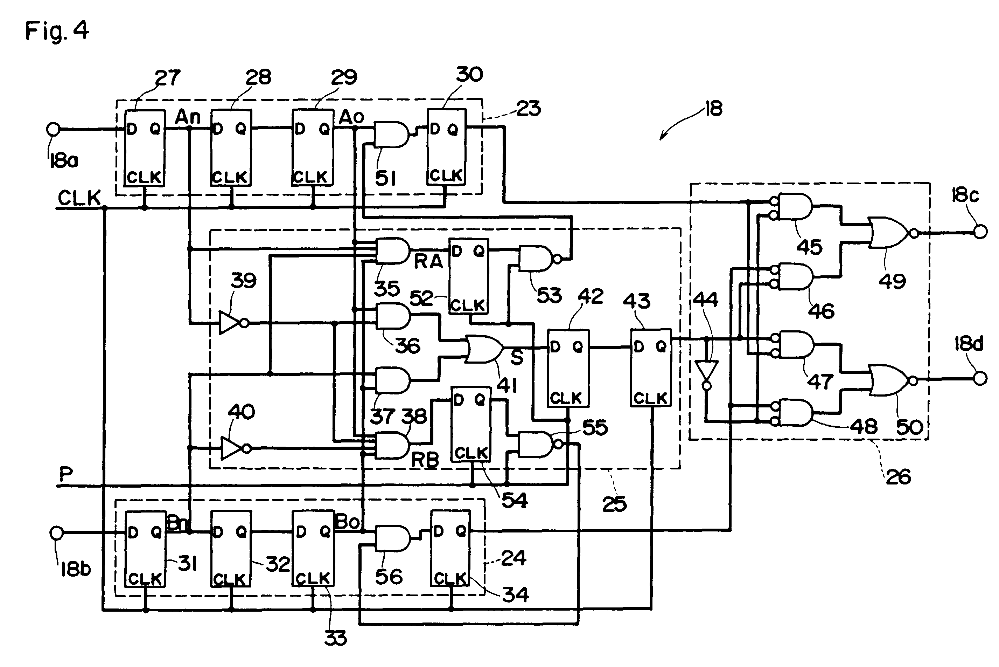

Fig. 4 shows a detailed circuit diagram of the 2x2 unit switch 18 shown in Fig. 3.

The shift registers 23 and 24 comprise four D-type flip-flops 27 to 30 and 31 to 34 and AND circuits 51 and 56, resepectively. The bits $A_o$ and $B_o$ which correspond to the top bits of the input cells A and B are supplied to the controller 25 from the inputs of the AND circuits 51 and 56 connected to the data input terminals D of the D-type flip-flops 30 and 34 of the final stages which are located at the rightmost in Fig. 4. The bits $A_n$ and $B_n$ are

supplied to the controller 25 from the n-th stage data input terminals D counted leftward from the final stage D-type flip-flops.

For example, when the 2x2 unit switch 18 is located in the first stage block 20, the data from the data input terminals D of the D-type flip-flops 29 and 33 are supplied to the controller 25. when the 2x2 unit switch 18 is located in the second stage block 21, the data from the data input terminals D of the D-type flip-flops 28 and 32 (as shown in Fig. 4) are supplied to the controller 25. when it is located in the third stage block 22, the data from the data input terminals D of the D-type flip-flops 27 and 31 are supplied to the controller 25. The D-type flip-flops 27 to 34 supplies the signals applied to the data input terminals D to the data output terminals Q in synchronism with the clock pulse CLK.

The controller 25 comprises NOT circuits 39 and 40, AND circuits 35 to 38, NAND circuits 53 and 55, an OR circuit 41 and D-type flip-flops 42, 43, 52 and 54. Those logic circuits are connected in accordance with a logical expression shown in Table 1. The bits $A_o$, $B_o$, $A_n$ and $B_n$ supplied to the controller 25 are logically operated by the NOT circuit 39, the AND circuits 36 and 37 and the OR circuit 41 so that a control signal S to control the connection state of the switching element 26 is generated. Reset signals RA and RB are generated through logical operation by the NOT circuits 39 and 40 and the AND circuits 35 and 38 to reset the vacancy identification bit I of the cell which has lost in the conflict of the cells. In table 1, " $\cdot$ " represents an AND function, " $+$ " represents an OR function, and " $\overline{\phantom{x}}$ " represents an inverted signal.

Table 1

| Signal | Logical Expression |
|---|---|
| S | $A_o \cdot \overline{A_n} + B_o \cdot B_n$ |
| RA | $A_o \cdot B_o \cdot A_n \cdot B_n$ |
| RA | $A_o \cdot B_o \cdot \overline{A_n} \cdot \overline{B_n}$ |

Further, the control signal S is produced by the D-type flip-flops 42 and 43 in synchronism with the timing at which the switching pulse P is applied to the clock terminals CLK of the D-type flip-flop 42. The switching pulse P rises at the timing at which the bits $A_o$ and $B_o$ corresponding to the top bits of the cells, that is, the vacancy identification bits I reach the data input terminals D of the D-type flip-flops 30 and 34. The bits $A_n$ and $B_n$ at this timing correspond to the n-th bits from the tops of the destination addresses AD of the cells.

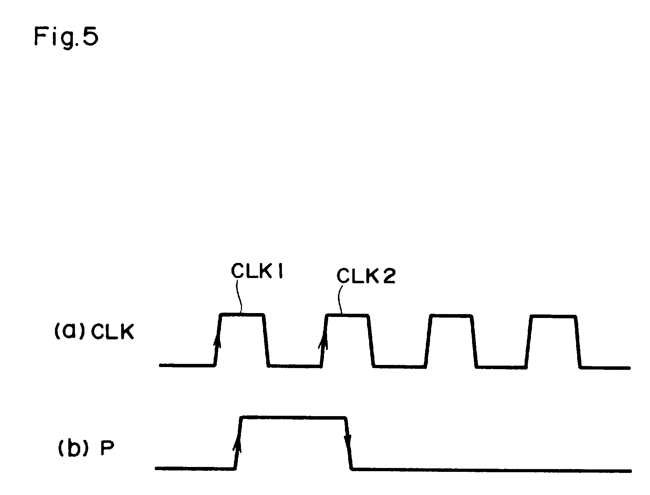

A timing relationship between the switching pulse P and the clock pulse CLK is shown in Fig. 5. The switching pulse P shown in Fig. 5(b) rises a certain time after the rise of the clock CLK1 of the clock pulse CLK shown in Fig. 5(a), and falls a certain time after the fall of the next clock CLK2. Accordingly, a new control signal S is produced from the D-type flip-flop 43 to which the clock pulse CLK is applied, at the timing of the rise of the clock signal CLK2, in accordance with the cell information currently inputted.

The reset signals RA and RB are produced by the AND circuits 35 and 38, supplied to the D-type flip-flops 52 and 54, and supplied to the NAND circuits 53 and 55 in synchronism with the input timing of the switching pulse P. In the NAND circuits 53 and 55 the reset signals are ANDed with the switching pulse P and the output signals are inverted and then supplied to the AND circuits 51 and 56 in the shift registers 23 and 24. In the AND circuits 51 and 56, the output signals of the NAND circuits 53 and 55 are ANDed with the output signals of the D-type flip flops 29 and 33, and the resulting signals are supplied to the data input terminals D of the D-type flip-flops 30 and 34. As a result, the reset signals RA and RB are set to "1", which are then inverted to "0", which in turn are supplied to the AND circuits 51 and 56. Thus, the vacancy identification bit I of the cell which lost in the conflict is reset.

The switching element 26 comprises a NOT circuit 44, NOR circuits 45 to 48 and NOR circuits 49 and 50. The connection state thereof is switched as shown in Table 2 in accordance with the control signal S supplied from the controller 25.

Table 2

| Signals S | Switching State |
|-----------|-----------------|
| 0 | Cross |
| 1 | Go straight |

when the control signal S is "0", the cell data A and B supplied from the input terminals 18a and 18b and outputted from the shift registers 23 and 24 are supplied to the output terminals 18d and 18c, respectively. In this case, the lines connecting the input terminals 18a and 18b with the output terminals 18d and 18c cross so that the travel directions of the cell data A and B cross. When the control signal S is "1", the cell data A and B are supplied to the output terminals 18c and 18d, respectively. Thus, the lines connecting the input terminals with the output terminals are parallel and the travel directions of the cell data A and B are straight.

Such connection state is attained by the following operation of the switching element 26. When the control signal S is "0", the inverted signal of the control signal S supplied from the NOT circuit 44 is "1" so that one input of each of the NOR circuits 45 and 48 is always high level. Accordingly, the outputs of the NOR circuits 45 and 48 are always low level without regard to other inputs.

Further, since the control signal S is "0", one input of each of the NOR circuits 46 and 47 is always low level and the outputs of the NOR circuit 46 and 47 are determined in accordance with other inputs. The output of the NOR circuit 47 is the inverted signal of the data supplied to the input terminal 18a, and the output of the NOR circuit 46 is the inverted signal of the data supplied to the input terminal 18b. The output of the NOR circuit 47 is further supplied to the NOR circuit 50, and the input data from the input terminal 18a is again inverted into the original signal, which is supplied to the output terminal 18d. The output of the NOR circuit 46 is further supplied to the NOR circuit 49 where it is again inverted into the original signal, which is supplied to the output terminal 18c.

As a result, when the control signal S is "0", the travel directions of the input cells A and B cross.

When the control signal S is "1", one input of each of the NOR circuits 46 and 47 is always high level as opposed to the above case. As a result, the outputs of the NOR circuits 46 and 47 are always low level. On the other hand, one input of each of the NOR circuits 45 and 48 is always low level, and the outputs of the NOR circuits 45 and 48 are determined in accordance with other inputs. The output of the NOR circuit 45 is the inverted signal of the data supplied to the input terminal 18a, and the output of the NOR circuit 48 is the inverted signal of the data supplied to the input terminal 18b. The output of the NOR circuit 45 is supplied to the NOR circuit 49, and the input data from the input terminal 18a is again inverted into the original signal, which is supplied to the output terminal 18c. The output of the NOR circuit 48 is supplied to the NOR circuit 50 where it is again inverted into the original signal, which is supplied to the output terminal 18d.

As a result, when the control signal S is "1", the travel directions of the input cells A and B are straight.

The cells supplied to the input channels 1 to 8 of the 8x8 exchange switch 17 are read starting from the vacancy identification bits 1 of the headers H which are located at the tops of the cells. When the headers H are to be read into the input channels 1 to 8, the cell synchronization signal C is supplied to the switching pulse generator 19, which generates the switching pulses p1 to p3, at the timing at which the connection of the blocks 20 to 22 are to be switched. The header H is read into the first stage block 20 of the 8x8 exchange switch 17 by the switching pulses p1 to p3, and it is outputted from the final stage block 22.

At the timing at which the switching pulses p1 to p3 are generated, the vacancy identification bit I and the corresponding bit of the destination address AD are supplied to the controller 25 of each of the 2x2 unit switches 18. The controller 25 performs the predetermined logical operation in accordance with Table 1 based on the input bit information and supplies the resulting control signal S to the switching element 26, which determines the connection state of itself in accordance with Table 2.

When at least one of the vacancy identification bits I of the two cells supplied to the 2x2 unit switch 18 is "0", at least one of the bits $A_o$ and $B_o$ at the timing at which the switching pulse P is produced is "0". Thus, as seen from the logical expressions of Table 1, the control signal S follows the bit $A_n$ or $B_n$ of the destination address AD of the cell whose vacancy identification bit I (bit $A_o$ or $B_o$) is not "0". Accordingly, the connection state of the switching element 26 is set to a state in which the cell whose vacancy identification bit I is not "0" is preferentially outputted.

In this case, one of the bits $A_o$ and $B_o$ is always "0" as described above, both reset signals RA and RB are "0" as seen from the logical expression of Table 1. Thus, the output signals to the AND circuits 51 and 56 in the shift registers 23 and 24 are "1", and the input data of the D-type flip-flops 30 and 34 follow the output data of the D-type flip-flops 29 and 33, because there is no conflict of cells as the control signal S is generated when one of the vacancy identification bits I is "0" such that the destination address of the information of the "0" cell is neglected.

When both vacancy identification bits I of the 2-input cell are "1" and the bits $A_n$ and $B_n$ of the destination address AD are different from each other, that is, when effective information is retained in the 2-input cell and the corresponding bits of the address are different, the control signal S is determined by the combination of the bits $A_n$ and $B_n$ as seen from Table 1 to determine the connection state of the switching element 26.

In this case, both reset signals RA and RB are "0", because the bits $A_n$ and $B_n$ are different from each other because of different addresses, one of the bits $A_n$ and $B_n$ is always "0", and the AND function of the bits $A_n$ and $B_n$ and the AND function of the bits $\overline{A_n}$ and $\overline{B_n}$ shown in Table 1 are always "0".

On the other hand, when both vacancy identification bits I of the 2-input cell are "1" and the 2-input cell retains effective information, and the corresponding bits $A_n$ and $B_n$ of the destination address AD are same, the input cells conflict. Thus, the cells are processed in the following manner and the won cell is outputted to the output terminal in accordance with the destination address stored in the cell. The vacancy identification bit I of the lost cell is reset to "0", and the connection state of the switching element 26 is determined such that the cell is outputted to the different output terminal than the destination address.

When the bits $A_n$ and $B_n$ are "1", $A_o \cdot \overline{A_n}$ in the expression of the signal S in Table 1 is "0" and $B_o \cdot B_n$ is "1" so that the control signal S is "1". As a result, the connection state of the switching element 26 is determined to the direction which causes the cell data to go straight as shown in Table 2. In this case, since all bits in the expression of the reset signal RA shown in Table 1 are "1", the logical operation result for the rest signal RA is "1". When the reset signal RA is supplied to the AND circuit 51 in the shift register 23, it is changed to "0" and the input data to the D-type flip-flop 30 is forcibly changed to "0". Accordingly, vacancy identification bit I of the cell inputted from the input terminal 18a is forcibly changed to "0" and it is outputted to the output terminal 18c with the indication of the cell which has no effective

information. Since $\overline{A_n} \cdot \overline{B_n}$ in the expression of the reset signal RB shown in Table 1 is "0", the reset signal RB is "0". As a result, when the reset signal RB is supplied to the AND circuit 56 in the shift register 24, it is "1" and the input data of the D-type flip-flop 34 is "1". Accordingly, the cell B supplied to the input terminal 18b has the vacancy identification bit I held "1" so that it is handled as effective information and preferentially supplied to the output terminal 18d.

When the bits $A_n$ and $B_n$ are "0", $A_o \cdot A_n$ in the expression of the signal S in Table 1 is "1" and $B_o \cdot B_n$ is "0". Thus, the control signal S is again "1". Accordingly, the connection state of the switching element 26 is determined in the direction to cause the cell data to go straight, as it does in the previous case. The reset signal RA resulting from the logical expression of Table 1 is "0", and the reset signal RB is "1". As a result, the vacancy identification bit I of the cell A supplied to the input terminal 18a is held "1" and the cell A is handled as effective information. The vacancy identification bit I of the cell B supplied to the input terminal 18b is forcibly reset to "0" and marked as invalid information.

In accordance with the present embodiment, even if the cells both having effective information and the same destination addresses are simultaneously applied to the 2x2 unit switch 18 so that the cells conflict, the lost cell has the vacancy identification bit I changed to "0" and marked as the cell having no effective information. As a result, even if the lost cell is sent to the direction different from the predetermined path, it is processed in the next stage unit cell as the cell having no effective information. Accordingly, a probability of loss of the cell having effective information is reduced and the transmission of wrong information eliminated.

In the present embodiment, the present invention is applied to the 8x8 exchange switch 17. However, the present invention is not limited to such embodiment but it may be applied to a 16x16 switches to attain the same effect.

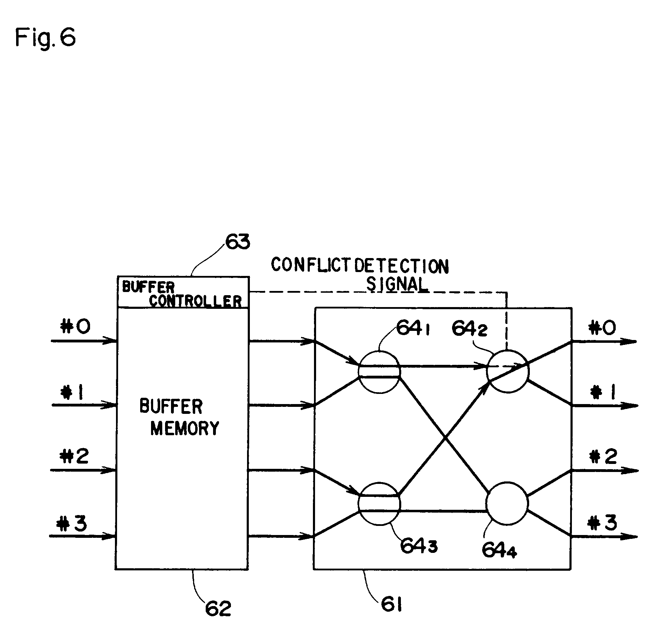

A second embodiment of the present invention is now explained with reference to Fig. 6 to 8. The like elements are designated by the like numerals and duplicated explanation is omitted.

Fig. 6 shows a broad band digital exchange in accordance with the second embodiment. A buffer memory 62 stores cells received by input channels #0 to #3. A buffer control unit 63 controls sending of the cells stored in the buffer memory 62 based on conflict detection signals supplied from switching elements $64_1$ to $64_4$ in the switching element network 61. In Fig. 6, only the conflict in the switching element $64_2$ is shown. The switching element network 61 switches the transmission path in accordance with the destination addresses stored in the input cells to output the input cells to the predetermined output channels #0 to #3.

A data format of the cell is similar to that in the first embodiment shown in Fig. 1. The coding into the data format is attained by a higher layer of the broad band digital exchange, based on the data which includes subscriber's addresses, sent from an adaptor provided between a terminal and the transmission path. The destination data of the header is expressed in binary notation, and the first bit represents the travel direction in the first switching element, the second bit represents the travel direction in the second switching element, and so on.

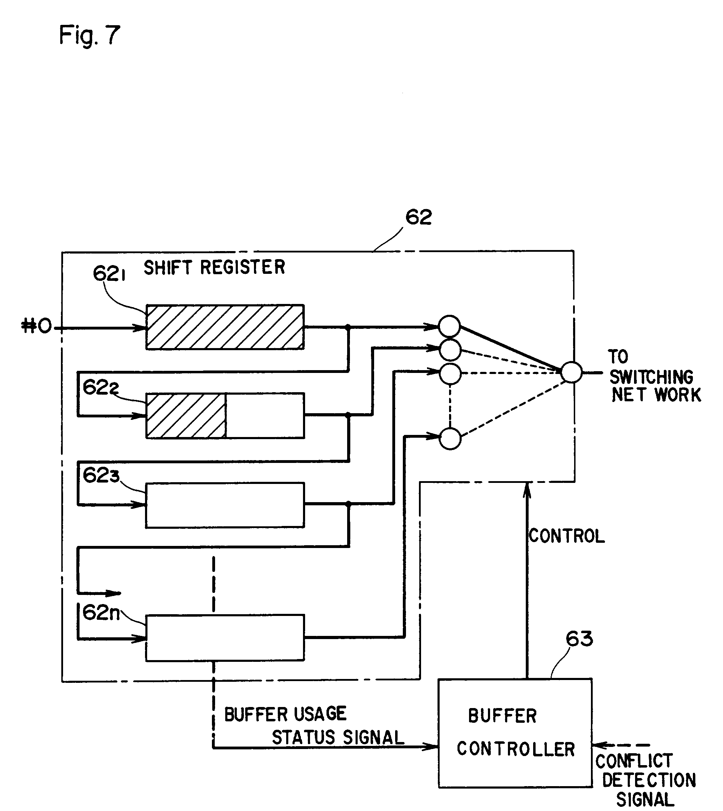

When the cells are applied to the input channels #0 to #3, the buffer control unit 63 stores the cells supplied to the buffer memory 62 in accordance with the clock pulse CLK extracted from the information on the transmission path. The buffer memory 62 comprises shift registers corresponding to the input channels #0 to #3, and detail thereof is shown in Fig. 7. Each of shift register $62_1$ to $62_n$ has a number of stages (capacity) to store data which is a multiple of the cell length, and data can be sent out from any output stage which is provided for each cell length. Data is supplied to each of the shift registers $62_1$ to $62_n$ in accordance with the clock pulse CLK so that the data is shifted.

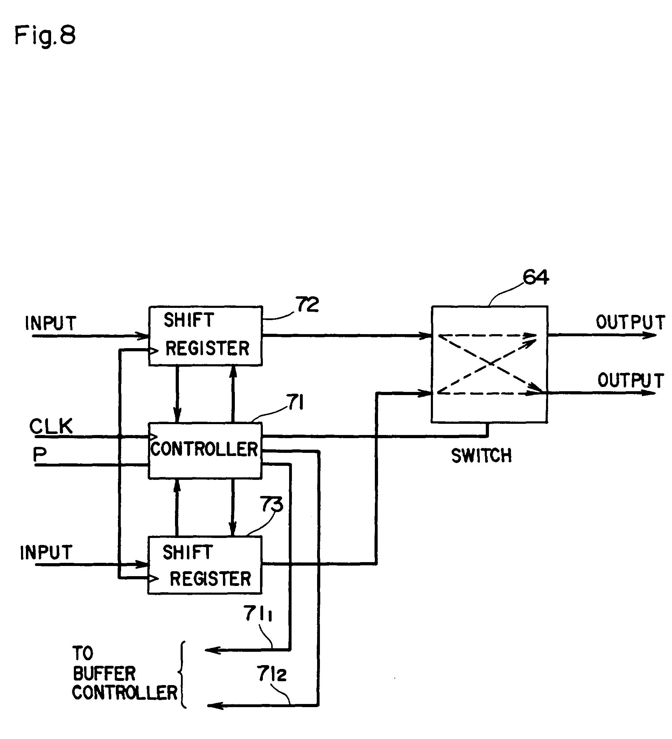

Fig. 8 shows a configuration of a detection signal output unit which produces a conflict detection signal. The detection signal output unit is arranged in a preceding stage to the switching element 64. The clock pulse CLK generated by the clock generator (not shown) is supplied to the controller 71, and the switching pulse P is also supplied at the timing of the send-out of the cell. The controller 71 detects the top bit of the cell supplied to the two input terminals, based on the clock pulse CLK and the switching pulse P. The address data used for the address switching in the switching element 64 is stored at a bit position which is a predetermined number behind the top bit. The controller 71 reads the address data from the shift register 72 and 73, and switches the connection state of the switching element 64 in accordance with the address data to pass the input information.

When the address data of the cells supplied to the two input terminals indicate the same output terminal of the switching element 64, the controller 71 controls such that the obliquely traveling cell can preferentially pass. It also sends out the conflict detection signal indicating that the non-preferential cell has been lost, to the buffer controller 63 through a signal line $71_1$ (or $71_2$). The preferential cell is sent out directly from the shift register 72 (or 73). The non-preferential cell is changed to null data which is identification data to indicate non-useful information when the data is shifted, and it is sent by the switching element 64 to an output terminal which is in a direction different from the address data.

In the first embodiment, when the cells both having effective information and the same destination addresses conflict, the straightly travelling cell is passed preferentially by the controller 25. However, as described above in the present embodiment, it is possible to pass the obliquely travelling cell preferentially by the same means as the first embodiment.

On the other hand, when the buffer controller 63 receives the conflict detection signal through the signal line 71, it resends the corresponding cell in the buffer memory 62 at the next cell sending timing and continues this operation until the conflict detection signal terminates. As the resending is repeated, the cells supplied to the input channels #0 to #3 may overflow in the buffer memory 62 and the cells may be discarded. However, in most cases, the discard rate of the cells is reduced by the resend operation of the cells. If the conflict detection signal is not received in a predetermined time after the cell has been sent out, a new cell is sent out at the next cell sending timing. The buffer controller 63 watches the usage status of the buffer memory 62, and fetches the information from the preceding stage shift register $62_i$ to the last stage at which the information (cell) is retained, and sends out the fetched information (see Fig. 7)

The second embodiment is not limited to the specific explanation but various modifications thereof may be made.

For example, the conflict detection signal need not be sent back through the two signal lines $71_1$ and $71_2$ so long as it is known that the information supplied to a specific input channel has been lost. Where high speed operation is required, the conflict detection signal may be serial data. The buffer memory 62 need not be a shift register but it may be an IC memory such as a RAM.

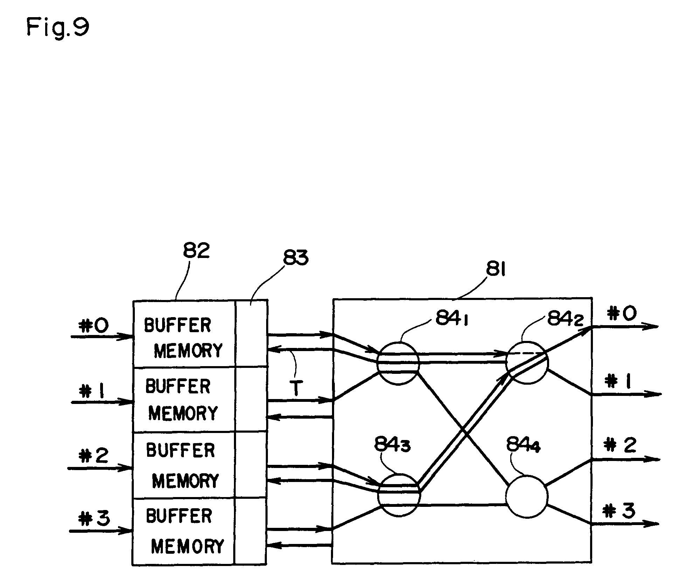

A third embodiment of the present invention is now explained with reference to Figs. 9 to 11. The like elements are designated by the like numerals and duplicated explanation is omitted.

Fig. 9 shows a broad band digital exchange in accordance with the third embodiment. A buffer memory 82 and a buffer controller 83 are provided for each of input channels #0 to #3. The cell information supplied to the input channels #0 to #3 is stored in the buffer memories 82 under the control of the buffer controllers 83. The buffer controllers 83 control the send-out of the cells stored in the buffer memories 82 in accordance with the conflict detection signals supplied from the switching blocks $84_1$ to $84_4$ in the switching element network 81. In Fig. 9, only the conflict in the switching block $84_2$ is shown. The switching element network 81 switches the transmission path in accordance with the destination addresses stored in the input cells to output the cell to the predetermined output channel #0 to #3. The data format of the cell is same as those of the first and second embodiment shown in Fig. 1.

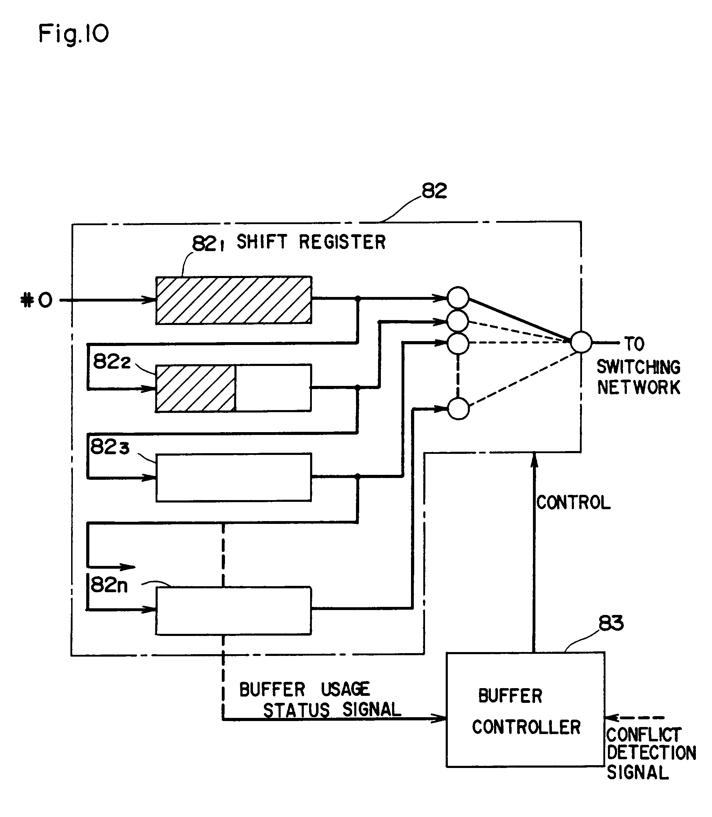

When the cell is supplied to the input channels #0 to #3, the buffer controller 83 stores the cell information into the buffer memory 82 in accordance with the clock pulse CLK. The buffer memory 82 comprises shift register corresponding to the input channels #0 to #3, and detail thereof is shown in Fig. 10. Each of the shift register $82_1$ to $82_n$ has a number of stages (capacity) to store a multiple of the cell length, and data can be sent out from any output stage provided for each cell length. Data is supplied to the shift registers $82_1$ to $82_n$ in ac-

cordance with the clock pulse CLK so that the data is shifted.

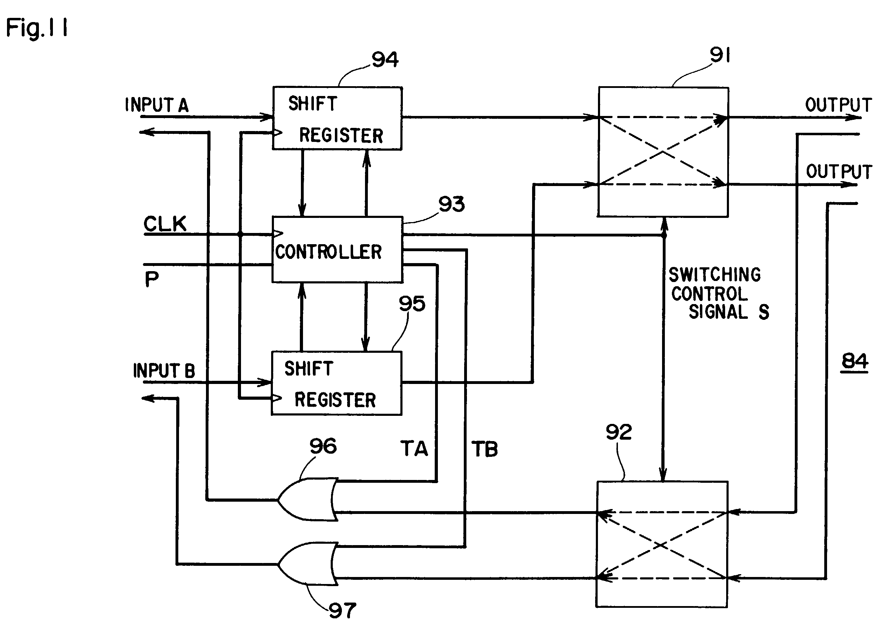

Fig. 11 shows a configuration of the switching block 84. A first switching element 91 controls the transmission path through which the cell information passes, and a second switching element 92 controls the transmission path of the conflict detection signal from downstream (as viewed from the flow of information). The switching of the switching elements 91 and 92 and the outputting of the conflict detect signal are effected by the controller 93. The shift registers 94 and 95 and the controller 93 constitute the detection signal output unit. OR circuits 96 and 97 OR the conflict detection signal supplied from the controller 93 with the conflict detection signal sent from the switching element 92.

The first and second switching elements 91 and 92 are mutually equally switched by the switching control signal S supplied from the controller 93. It is assumed that information reaches the switching block $84_i$ through several switching blocks 84 where the conflict of cells occurs. The second switching elements 92 of the switching blocks 84 through which the conflicting cell has passed before it reaches the switching block $84_i$ are appropriately switched by the switching control signal S so that a path for the conflict detection signal is established. As a result, the conflict detection signal can return to the input channel to which the conflicting cell was applied. The controller 93 detects the top bits of the cells supplied to the two input terminals in accordance with the switching pulse P and the clock pulse CLK. Further, the controller 93 reads the address data which is a predetermined number of bits behind the top bit, from the shift registers 94 and 95, and switches the switching elements 91 and 92 to send out the cell from the switching element 91.

When the address data of the input cells designate the same output terminal of the switching element 91, the controller 93 controls such that the obliquely traveling cell preferentially pass. The controller 93 also outputs a conflict detection signal which indicates that the non-preferential cell has been lost. The conflict detection signal includes two types of signals, TA and TB. When the input cell A has been lost, the conflict detection signal TA is outputted, and when the input cell B has been lost, the conflict detection signal TB is outputted. Thus, the conflict detection signal is returned to the channel to which the lost cell was supplied, and the conflict information is conveyed to the buffer controller 83. As a result, the preferential cell is sent out as it is from the shift register 94 (or 95). The non-preferential cell is changed to null data when the shift register 94 (or 95) is shifted, and it is sent to the output terminal different from the destination address in the switching element 91.

In the first embodiment, when the cells both having effective information and the same destination addresses conflict, the straightly travelling cell is passed preferentially by the controller 25. However, as described above in the present embodiment, it is possible to pass the obliquely travelling cell preferentially by the same means as the first embodiment.

In this manner, the conflict detection signal is returned to the buffer controller 83 through the path which is equal to the path through which the cell was sent out. When the buffer controller 83 receives the conflict detection signal, it sends out the corresponding cell stored in the buffer memory 82 at the next cell sending timing and continues this operation until the conflict detection signal terminates. As the resending is repeated, the cells supplied to the input channels #0 to #3 may overflow in the buffer memory 82 and the cells may be discarded. However, in most cases, the discard rate of the cells is lowered by the resending operation of the cells. If the conflict detection signal is not received in a predetermined time after the cell has been sent out, a new cell is sent out at the next cell sending timing. The buffer controller 83 watches the usage status of the buffer memory 82 and fetches the cell from the preceding stage shift register $82_i$ to the last stage at which the cell is retrained and sends out the fetched cell (see Fig. 10).

The third embodiment is not limited to the above explanation but many modifications may be made.

For example, the switching element network 81 is not limited to one which has four switching blocks 84 as shown in Fig. 9 but it may be different from system to system. The buffer memory 82 is not limited to the shift register but it may be an IC memory such as RAM.

From the invention thus described, it will be obvious that the invention may be varied in many ways. Such variations are not to be regarded as a departure from the scope of the invention, and all such modifications as would be obvious to one skilled in the art are intended to be included within the scope of the following claims.

**Claims**

1. A broad band digital exchange comprising:

   a plurality of input channels and output channels; and

   a plurality of stages of first switching means (91) for selectively connecting said input channels and said output channels;

   wherein cell information having address data (AD) added thereto, and applied to said input channels, is sent out to the output channels corresponding to the address data (AD) by switching said plurality of stages of first switching means (91) in accordance with the address data (AD),

   wherein an identification bit (I) for indicating whether effective information is retained, is stored in the cell information, and

wherein said plurality of stages of first switching means (91) determine connection states of corresponding switches in accordance with the address data (AD) and identification bit (I),

**characterized** by

a buffer memory (82) arranged in preceding stage to each of said input channels;

a detection signal output unit (93, 94, 95) provided for each of said plurality of stages of first switching means (91) for detecting conflict between the cell information based on the address data (AD) added to the input information and producing a conflict detection signal for only a losing one of the conflicting information; and

a buffer controller (83) for controlling the send-out of information stored in said buffer memory (82) in accordance with the conflict detection signal supplied from said detection signal output unit (93, 94, 95; and

a plurality of stages of second switching means (92) provided in duplex to said plurality of stages of first switching means (91) for selectively connecting said input channels with said output channels to establish a path for the conflict detection signal supplied from each said detection signal output unit (93, 94, 95).

2. A broad band digital exchange according to claim 1, wherein each said detection signal output unit (93, 94, 95) comprises:

two shift registers (94, 95) which respectively read in the cell information applied to said input channels bit by bit; and

a controller (93) which determines transmission path of the each cell information by reading in the identification bits (I) arranged in the top bit of the each cell information and bit information of the address data (AD) which are predetermined numbers of bits behind the top bits, and outputs a control signal (S) based on above determination, further when the address data (AD) of input information are identical, outputs a conflict detection signal (TA, TB) indicating that non-preferential cell information has been lost to a predetermined signal line;

wherein said plurality of stages of first switching means (91) comprise:

a plurality of 2x2 unit switches having two input terminals and two output terminals for switching the transmission path of the each cell information passed said two shift registers (94, 95) respectively, based on the control signal (S) produced in said controller (93),

wherein said plurality of stages of second switching means (92) comprise:

a plurality of second 2x2 unit switches having two input terminals and two output terminals for establishing a transmission path to send back a conflict detection signal produced in the controller of a next stage to which the first 2x2 unit switch transmits its output information, based on the control signal(s) produced in said controller (93) which determines the connection state of said first 2x2 unit switch; and

wherein an OR circuit (96, 97) is provided in which the conflict detection signal produced in the controller (93) of said second 2x2 unit switch is ORed with the conflict detection signal produced in the controller (93) of said first 2x2 unit switch, and which supplied the resulting signal to the second 2x2 unit switch of a forward stage which supplied the cell information to said two shift registers (94, 95);

wherein said buffer controller (83) responds to the conflict detection signal produced in said OR signal.

3. A broad band digital exchange according to claim 2, wherein said buffer memory (82) re-sends non-preferential cell information temporally stored therein to said input channel on the basis of the conflict detection signal provided by said controller (93).

4. A broad band digital exchange according to claim 2, wherein each of said switch means is a 2x2 switch means and said controller (93) returns back said conflict detection signal to a memory area of said buffer memory (82) in which non-preferential cell information is temporally stored.

5. A broad band digital exchange according to claim 1, wherein when the address data of input information are identical and the identification bits thereof indicate the retention of effective information, one of the input information is outputted based on the address data and the identification bit of the other of the input information is changed to indicate that no effective information is retained.

6. A broad band digital exchange according to claim 1, wherein the cell information comprises the identification bit arranged in the top bit of the cell information, the address data arranged after the identification bit and the information field arranged after the address data in accordance with the time sequence of the transmission.

## Patentansprüche

1. Digitale Breitbandvermittlung, welche aufweist:

mehrere Eingangskanäle und Ausgangskanäle; und
mehrere Stufen einer ersten Schalteinrichtung (91) zum selektiven Verbinden der Eingangskanäle und der Ausgangskanäle;
wobei die Zelleninformation ein ihr hinzugefügtes Adressendatensignal (AD) aufweist, und diese an die Eingangskanäle angelegt, an die Ausgangskanäle ausgesendet wird, die den Adressendatensignalen entspricht, indem die mehreren Stufen der ersten Schalteinrichtung (91) in Übereinstimmung mit den Adressendatensignalen (AD) geschaltet werden,
wobei ein Identifikationsbit (I) für die Anzeige, ob eine effektive Information enthalten ist, in der Zelleninformation gespeichert ist, und wobei die mehreren Stufen der ersten Schalteinrichtung (91) die Verbindungszustände der entsprechenden Schalter in Übereinstimmung mit dem Adressendatensignal (AD) und dem Identifikationsbit (I) bestimmen,
gekennzeichnet durch:
einen Pufferspeicher (82), der in einer Vorstufe zu jedem Eingangskanal angeordnet ist;
eine Detektionssignal-Ausgabeeinheit (93, 94, 95), die für jede der mehreren Stufen der ersten Schalteinrichtung (91) bereitgestellt ist, um einen Konflikt zwischen der Zelleninformation auf der Basis des der Eingangsinformation hinzugefügten Adressendatensignals (AD) zu detektieren und um ein Konflikt-Detektionssignal nur für eine verlorengehende in Konflikt kommende Information zu erzeugen; und
eine Puffersteuerung (83) zum Steuern des Aussendens der in dem Pufferspeicher (82) gespeicherten Information in Übereinstimmung mit dem Konflikt-Detektionssignal, das von der Detektionssignal-Ausgabeeinheit (93, 94, 95) geliefert wird; und
mehrere Stufen einer zweiten Schalteinrichtung (92), die in Duplex-Form zu den mehreren Stufen der ersten Schalteinrichtung (91) für einen selektives Verbinden der Eingangskanäle mit den Ausgangskanälen bereitgestellt sind, um einen Pfad für das Konflikt-Detektionssignal aufzubauen, das von jeder Detektionssignal-Ausgabeeinheit (93, 94, 95) geliefert wird.

2. Digitale Breitbandvermittlung nach Anspruch 1, wobei jede Detektionssignal-Ausgabeeinheit (93, 94, 95) aufweist:

zwei Schieberegister (94, 95), welche jeweils die an Eingangskanäle angelegte Zelleninformation bitweise einlesen;
eine Steuerung (93), welche den Übertragungspfad jeder Zelleninformation durch Lesen des in dem vordersten Bit jeder Zelleninformation angeordneten Identifikationsbits I und der Bitinformation des Adressendatensignals (AD), welche sich eine vorbestimmte Anzahl von Bit hinter den vordersten Bits befinden, bestimmt, und ein Steuersignal (S) ausgibt, das auf der vorstehenden Bestimmung basiert, und dann, wenn die Adressendatensignale (AD) der Eingangsinformation identisch sind, ein Konflikt-Detektionssignal (TA, TB) ausgibt, welches einer vorbestimmten Signalleitung anzeigt, daß eine nicht bevorzugte Zelleninformation verlorengegangen ist;
wobei die mehreren Stufen der ersten Schalteinrichtung (91) aufweisen:
mehrere 2x2-Einheitsschalter mit zwei Eingangsanschlüssen und zwei Ausgangsanschlüssen zum Schalten des Übertragungspfades jeder Zelleninformation, die die zwei Schieberegister (94, 95) passiert hat, auf der Basis des in der Steuerung (93) erzeugten Steuersignals S,
wobei die mehreren Stufen der zweiten Schalteinrichtung (92) aufweisen:
mehrere zweite 2x2-Einheitsschalter mit zwei Eingangsanschlüssen und zwei Ausgangsanschlüssen zum Aufbau eines Übertragungspfades, um ein Konflikt-Detektionssignal zurückzusenden, das in der Steuerung einer nächsten Stufe erzeugt wird, an welche der erste 2x2-Einheitsschalter seine Ausgangsinformation auf der Basis des(r) Steuersignals(e) überträgt, die in der Steuerung (93), welche den Zustand des ersten 2x2-Einheitsschalters bestimmt, erzeugt werden; und
wobei eine ODER-Schaltung (96, 97) vorgesehen ist, in welcher das in der Steuerung (93) des zweiten 2x2-Einheitsschalters erzeugte Konflikt-Detektionssignal mit dem in der Steuerung (93) des ersten 2x2-Einheitsschalters erzeugten Konflikt-Detektionssignal ODER-verknüpft wird, und welche das resultierende Signal an den zweiten 2x2-Einheitsschalter einer Vorstufe liefert, welche die Zelleninformation zu den zwei Schieberegistern (94, 95) liefert;
wobei die Puffersteuerung (83) auf das in dem ODER-Signal erzeugte Konflikt-Detektionssignal reagiert.

3. Digitale Breitbandvermittlung nach Anspruch 2, wobei der Pufferspeicher (82) temporär darin gespeicherte nicht bevorzugte Zelleninformation an den Eingangskanal auf der Basis des von der Steuerung (93) erzeugten Konflikt-Detektionssignals zurücksendet.

4. Digitale Breitbandvermittlung nach Anspruch 2, wobei jede Schalteinrichtung eine 2x2-Schalteinrichtung ist und die Steuerung (93) das Konflikt-Detektionssignal zu einem Speicherbereich des Pufferspeichers (82) zurücksendet, in welchem nicht bevorzugte Zelleninformation temporär gespeichert wird.

5. Digitale Breitbandvermittlung nach Anspruch 1, wobei dann, wenn die Adressendatensignale der Eingangsinformation identisch sind, und deren Identifikationsbit den Inhalt einer effektiven Information anzeigen, eine Eingangsinformation auf der Basis des Adressendatensignals ausgegeben wird und das Identifikationsbit der anderen Eingangsinformation verändert wird, um anzuzeigen, daß keine effektive Information enthalten ist.

6. Digitale Breitbandvermittlung nach Anspruch 1, wobei die Zelleninformation das in der vordersten Bit der Zelleninformation angeordnete Identifikationsbit aufweist, das Adressendatensignal hinter dem Identifikationsbit angeordnet ist und das Informationsfeld hinter dem Adressendatensignal in Übereinstimmung mit dem zeitlichen Ablauf der Übertragung angeordnet ist.

**Revendications**

1. Central numérique à large bande, comprenant:

plusieurs canaux d'entrée et plusieurs canaux de sortie; et
plusieurs étages d'un premier moyen de commutation (91), pour à connecter de manière sélective lesdits canaux d'entrée et lesdits canaux de sortie;
dans lequel des informations en cellules auxquelles sont ajoutées des données d'adressage (AD), et appliquées sur lesdits canaux d'entrée, sont envoyées aux canaux de sortie correspondants aux données d'adressage (AD), en commutant lesdits plusieurs étages du premier moyen de commutation (91) en accord avec les données d'adressage (AD),
dans lequel un bit d'identification (I), pour indiquer si des informations effectives sont contenues, est conservé dans les informations en cellules, et
dans lequel lesdits plusieurs étages du premier moyen de commutation (91) déterminent les états de connexion de commutateurs correspondants, en accord avec les données d'adressage (AD) et le bit d'identification (I),
caractérisé par
une mémoire tampon (82) disposée dans un étage précédant chacun desdits canaux d'entrée;
une unité de sortie de signal de détection (93, 94, 95) prévue pour chacun desdits plusieurs étages du premier moyen de commutation (91), pour détecter un conflit entre les informations en cellules sur base des données d'adressage (AD) ajoutées aux informations d'entrée, et pour produire un signal de détection de conflit uniquement pour celle des informations conflictuelles qui est perdante; et
un contrôleur tampon (83), pour gérer l'émission d'informations conservées dans ladite mémoire tampon (82), en accord avec le signal de détection de conflit fourni par ladite unité de sortie de signal de détection (93, 94, 95); et
plusieurs étages d'un deuxième moyen de commutation (92), prévus en duplex avec lesdits plusieurs étages du premier moyen de commutation (91), pour connecter de manière sélective lesdits canaux d'entrée avec lesdits canaux de sortie, afin d'établir un chemin pour le signal de détection de conflit fourni par chacune desdites unités de sortie de signal de détection (93, 94, 95).

2. Central numérique à large bande selon la revendication 1, dans lequel chacune desdites unités de sortie de signal de détection (93, 94, 95) comprend:

deux registres à décalage (94, 95) qui lisent respectivement, bit par bit, les informations en cellules appliquées sur lesdits canaux d'entrée; et
un contrôleur (93) qui détermine le chemin de transmission de chacune des informations en cellules, en lisant les bits d'identification (I) placés dans le bit de tête de chacune des informations en cellules et les informations de bit des données d'adressage (AD), qui sont des nombres prédéterminés de bits situés derrière les bits de tête, et qui délivre un signal de commande (S) basé sur la détermination ci-dessus, et qui délivre de plus, lorsque les données d'adressage (AD) des informations d'entrée sont identiques, un signal de détection de conflit (TA, TB) indiquant que des informations en cellules non préférentielles ont été perdues, vers une ligne de signal prédéterminée;

dans lequel lesdits plusieurs étages du premier moyen de commutation (91) comprennent:

plusieurs commutateurs à 2x2 unités, présentant deux bornes d'entrée et deux bornes de sortie, pour commuter le chemin de transmission de chacune des informations en cellules passées respectivement par lesdits deux registres à décalage (94, 95), sur base du signal de commande (S) produit dans ledit contrôleur (93),

dans lequel lesdits plusieurs étages du deuxième moyen de commutation (92) comprennent:

plusieurs deuxièmes commutateurs à 2x2 unités présentant deux bornes d'entrée et deux bornes de sortie, pour établir un chemin de transmission pour renvoyer un signal de détection de conflit produit dans le contrôleur d'un étage situé après celui où le premier commutateur à 2x2 unités transmet ses informations de sortie, sur base du ou des signaux de commande produits dans ledit contrôleur (93), qui détermine l'état de connexion dudit premier commutateur à 2x2 unités; et

dans lequel il est prévu un circuit OU (96, 97) dans lequel le signal de détection de conflit produit dans le contrôleur (93) dudit deuxième commutateur à 2x2 unités est combiné au signal de détection de conflit produit dans le contrôleur (93) dudit premier commutateur à 2x2 unités, et qui fournit le signal résultant au deuxième commutateur à 2x2 unités d'un étage avant qui a fourni les informations en cellules auxdits deux registres à décalage (94, 95);

dans lequel ledit contrôleur tampon (83) répond au signal de détection de conflit produit dans ledit signal OU.

3. Central numérique à large bande selon la revendication 2, dans lequel ladite mémoire tampon (82) renvoie audit canal d'entrée des informations en cellules non préférentielles qui y sont stockées temporairement, sur base du signal de détection de conflit fourni par ledit contrôleur (93).

4. Central numérique à large bande selon la revendication 2, dans lequel chacun desdits moyens de commutation est un moyen de commutation 2x2 et ledit contrôleur (93) renvoie ledit signal de détection de conflit à une zone de mémoire de ladite mémoire tampon (82) dans laquelle des informations en cellules non préférentielles sont stockées temporairement.

5. Central numérique à large bande selon la revendication 1, dans lequel lorsque les données d'adressage des informations d'entrée sont identiques et que les bits d'identification de celles-ci indiquent que des informations effectives sont contenues, une des informations d'entrée est délivrée sur base des données d'adressage et le bit d'identification de l'autre information d'entrée est modifié pour indiquer qu'aucune information effective n'est contenue.

6. Central numérique à large bande selon la revendication 1, dans lequel les informations en cellules comprennent le bit d'identification placé dans le bit de tête des informations en cellules, les données d'adressage placées après le bit d'identification et le champ d'informations placé après les données d'adressage, selon la séquence temporelle de la transmission.

Fig.1

Fig.2

Fig.3

Fig. 4

Fig.5

(a) CLK

CLK1  CLK2

(b) P

Fig. 6

CONFLICT DETECTION SIGNAL

BUFFER CONTROLLER

63

#0
#1
#2
#3

BUFFER MEMORY

62

64₁  64₂

64₃  64₄

61

#0
#1
#2
#3

Fig. 7

TO SWITCHING NET WORK

CONTROL

SHIFT REGISTER

621

622

623

62n

62

#0

63

BUFFER CONTROLLER

BUFFER USAGE STATUS SIGNAL

CONFLICT DETECTION SIGNAL

# Fig.8

Fig.9

Fig.10

82

82₁ SHIFT REGISTER

#0

82₂

82₃

82n

TO
SWITCHING
NETWORK

CONTROL

BUFFER USAGE
STATUS SIGNAL

83

BUFFER
CONTROLLER

CONFLICT
DETECTION
SIGNAL

Fig.11

INPUT A

CLK

P

INPUT B

SHIFT REGISTER  94

CONTROLLER  93

SHIFT REGISTER  95

96

97

TA    TB

91

92

OUTPUT

OUTPUT

SWITCHING CONTROL SIGNAL S

84

EP 0 370 510 B1

22